# EUROPÄISCHE PATENTSCHRIFT

(11) **EP 3 092 562 B1**
(45) Veröffentlichungstag und Bekanntmachung des Hinweises auf die Patenterteilung: **19.08.2020**
(21) Anmeldenummer: 14812431.6
(22) Anmeldetag: 05.12.2014
(51) Int. Cl.: G05B 19/042, G06F 13/42, G06F 8/654

(54) **VERFAHREN UND SYSTEM ZUM PROGRAMMIEREN VON MEHREREN STEUERGERÄTEN**
METHOD AND SYSTEM FOR PROGRAMMING A PLURALITY OF CONTROL UNITS
PROCÉDÉ ET SYSTÈME DE PROGRAMMATION DE PLUSIEURS APPAREILS DE COMMANDE

(30) Priorität: 08.01.2014 DE 102014200089
(43) Veröffentlichungstag der Anmeldung: 16.11.2016
(73) Patentinhaber: Bayerische Motoren Werke Aktiengesellschaft, 80809 München (DE)
(72) Erfinder: FISCHER, Michael, 81735 Muenchen (DE); VÖGEL, Hans-Jörg, 82194 Groebenzell (DE)
(86) Internationale Anmeldenummer: PCT/EP2014/076717
(87) Internationale Veröffentlichungsnummer: WO 2015/104105

(56) Entgegenhaltungen:
- DE-A1- 10 007 610
- DE-A1-102011 055 087
- US-A1- 2004 153 590
- US-A1- 2005 090 906

## Beschreibung

Verfahren, und System zum Programmieren von mehreren Steuergeräten

Die Erfindung betrifft ein Verfahren zum Programmieren von mehreren Steuergeräten eines Fahrzeuges über einen Bus. Die Erfindung betrifft des Weiteren ein System zum Programmieren von mehreren Steuergeräten eines Fahrzeuges über einen Bus.

Heutige Fahrzeuge weisen eine immer größere Menge an Steuergeräten auf. Wird eines dieser Steuergeräte mit einer neuen Firmware beschrieben, so ist es gegebenenfalls ebenfalls nötig, weitere Steuergeräte mit neuer Firmware zu beschreiben um die Steuergeräte aneinander anzupassen.

Aus der DE 10 2011 055987 A1 ist ein Verfahren zum Neuprogrammieren bzw. so genannten Flashen von Steuergeräten in einem Fahrzeug über einen Fahrzeug-Datenbus bekannt, bei dem gleichzeitig mehrere Steuergeräte geflasht werden Aus der US 2005/090906 A1 ist ein Verfahren zum Flashen von Steuergeräten in einem Fahrzeug bekannt, bei dem der Austausch von Datenpaketen mittels einer Interleaving-Technik gesteuert wird.

In der US 2004/0153590 A1 ist ebenfalls ein Verfahren zum parallelen Flashen von Steuergeräten in Fahrzeugen bekannt, bei dem zum Beispiel von der Programmierstation eine Rundruf-Nachricht an alle Module versandt werden kann.

Aus der DE 100 07 610 A1 ist ein Verfahren zur Programmierung eines Steuergeräts in einem Kraftfahrzeug bekannt, bei dem das Steuergerät durch ein extern zugeführtes Signal von einem Betriebsmode in einen Programmiermode umgeschaltet wird.

Die Aufgabe, die der Erfindung zugrunde liegt, ist es, ein Verfahren und eine korrespondierende Vorrichtung zu schaffen, das beziehungsweise die dazu beiträgt, dass mehrere Steuergeräte eines Fahrzeuges effektiv programmiert werden können.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren zum Programmieren von mehreren Steuergeräten eines Fahrzeuges über einen Bus. Des Weiteren zeichnet sich die Erfindung aus durch ein korrespondierendes System. Die Steuergeräte des Fahrzeuges werden jeweils in einen Modus persistenter Busruhe versetzt, in dem die Steuergeräte jeweils nur Nachrichten auf dem Bus versenden, wenn diese von extern des jeweiligen Steuergerätes angefordert werden. Während die Steuergeräte sich in dem Modus persistenter Busruhe befinden, werden die Steuergeräte jeweils in einem Beschreibvorgang des jeweiligen Steuergerätes mit einer neuen Firmware beschrieben. Zumindest eine Teilmenge der Steuergeräte wird hierbei derart beschrieben, dass sich die jeweiligen Beschreibvorgänge der Teilmenge der Steuergeräte zeitlich überlappen.

Persistent bedeutet in diesem Zusammenhang, dass sich die jeweiligen Steuergeräte auch nach einem Neustart noch in dem Modus persistenter Busruhe befinden. Die Steuergeräte befinden sich also solange in einer Busruhe, bis diese von extern aufgehoben wird.

Bei dem Bus handelt es sich insbesondere um ein Controller Area Network (CAN-Bus), insbesondere gemäß ISO Norm 11898. Der CAN-Bus ist ein serielles Bussystem und wird insbesondere für die Vernetzung von Steuergeräten in Fahrzeugen verwendet.

Das zeitliche Überlappen der jeweiligen Beschreibvorgänge bedeutet in diesem Zusammenhang, dass die jeweiligen Steuergeräte quasi parallel mit neuer Firmware beschrieben werden. Da auf dem Bus im Allgemeinen Daten in einzelnen Paketen hintereinander versendet werden, handelt es sich hierbei um quasi parallele Beschreibvorgänge die sich zeitlich überlappen.

Das hier erläuterte Vorgehen bezieht sich somit insbesondere auf eine Erweiterung des Programmierablaufs gemäß der ISO Norm 14229-1 (2013). Die ISO Norm 14229-1 spezifiziert das Kommunikationsprotokoll Unified Diagnostic Services (UDS), wobei UDS ein Kommunikationsprotokoll darstellt zum Kontaktieren und Warten von in einem Fahrzeug verbauten Steuergeräten. Die ISO Norm 14229-1 spezifiziert ebenfalls ein Kommunikationsprotokoll zum Kontaktieren und Warten von in einem Fahrzeug verbauten Steuergeräten über einen CAN-Bus.

Die korrespondierende Vorrichtung umfasst insbesondere einen Tester, der beispielsweise als ein MCD-3 D System gemäß der Normreihe ISO22900 ausgestaltet ist. MCD-3 steht hierbei für eine Programmierschnittstelle für Anwendungen für Automotive-Server-Software. MCD-3 D beschreibt domänenspezifische Funktionalitäten zur Diagnose von Fahrzeugsteuergeräten.

Durch die zeitliche Überlappung der Beschreibvorgänge können sehr effektiv mehrere Steuergeräte nahezu gleichzeitig programmiert werden, da hierbei deutlich weniger Zeit benötigt wird als bei einer seriellen Beschreibung der Steuergeräte hintereinander. Die Parallelität wird durch ein Zugangssteuergerät zum Fahrzeug und oder durch eine Buskapazität des Busses beschränkt. Das Zugangssteuergerät umfasst beispielsweise die Vorrichtung. Das Zugangssteuergerät und der Bus an dem das Zugangssteuergerät angeschlossen ist, können fehlerfrei nur eine begrenzte Anzahl an Nachrichten gleichzeitig verarbeiten. Hieraus ergibt sich eine maximale Kapazität pro Bus. Diese maximale Kapazität ist der Vorrichtung bekannt, beispielsweise ist sie in der Vorrichtung gespeichert. Die maximale Kapazität dient der Vermeidung von Übertragungsfehlern, die sonst gegebenenfalls zu einem Abbruch des jeweiligen Beschreibvorgangs führen würde.

Da gegebenenfalls nicht alle Beschreibvorgänge zeitgleich beendet werden, ist es wichtig, dass sich die Steuergeräte in dem Modus persistenter Busruhe befinden. Befinden sich die Steuergeräte nicht in dem Modus persistenter Busruhe, so würde ein Steuergerät nach einem erfolgreichen Beschreibvorgang und gegebenenfalls einem anschließenden Neustart gegebenenfalls sofort wieder anfangen Nachrichten auf dem Bus zu versenden. Diese Nachrichten können die restlichen noch nicht beendeten oder noch anstehenden Beschreibvorgänge stören.

Gemäß einer vorteilhaften Ausgestaltung werden die Steuergeräte jeweils durch Setzen eines persistenten Flags in dem jeweiligen Steuergerät in den Modus persistenter Busruhe versetzt.

Ein Flag bezeichnet insbesondere ein Datenfeld, das mit einem von zwei Werten jeweils belegt ist, wobei ein erster Wert ein gesetztes Flag und ein zweiter Wert ein nicht gesetztes Flag repräsentiert. Ein Flag kann somit insbesondere zur Kennzeichnung bestimmter Zustände benutzt werden. Ein persistentes Flag ist ein Flag, das auch nach einem Neustart des jeweiligen Steuergerätes noch gesetzt ist, also insbesondere solange, bis es von extern gelöscht wird.

Durch Setzen des persistenten Flags ist es sehr effektiv möglich, das jeweilige Steuergerät in den Modus persistenter Busruhe zu versetzen.

Gemäß einer weiteren vorteilhaften Ausgestaltung wird jeweils eine maximale Durchführungszeit vorgegeben für die jeweiligen Beschreibvorgänge der Steuergeräte. Falls die jeweilige maximale Durchführungszeit überschritten wird, wird der jeweilige Beschreibvorgang neu gestartet.

Jeder Beschreibvorgang eines Steuergerätes umfasst insbesondere die Schritte Löschen, Schreiben und Prüfen. Jeder dieser Schritte kann gegebenenfalls mehrere Minuten dauern. Hierbei sendet beispielsweise jedes Steuergerät regelmäßig, zum Beispiel alle 5 Sekunden, sogenannte ResponsePending Telegramme an die Vorrichtung. Diese Telegramme beinhalten die Information, dass das jeweilige Steuergerät noch nicht fertig ist und noch Zeit für die Antwort benötigt. Solange das jeweilige Steuergerät diese Telegramme schickt, bricht die Vorrichtung den Beschreibvorgang gegebenenfalls nicht ab. Somit wird gegebenenfalls, falls das jeweilige Steuergerät in einer Endlosschleife ist, der jeweilige Beschreibvorgang nicht abgebrochen.

Die jeweilige maximale Durchführungszeit verhindert, dass die Vorrichtung endlos wartet, bevor der jeweilige Beschreibvorgang abgebrochen wird. Nachdem die maximale Durchführungszeit gewartet wurde, wird der jeweilige Beschreibvorgang abgebrochen und es wird entweder mit einem Beschreibvorgang des nächsten Steuergeräts begonnen, wenn das Steuergerät mit dem Fehler wirklich in einer Endlosschleife ist, oder der Beschreibvorgang des Steuergerätes mit dem Fehler wird wiederholt.

Werden die jeweiligen Beschreibvorgänge zeitlich überlappend durchgeführt, ist die Verwendung der maximalen Durchführungszeit besonders vorteilhaft, da nur begrenzte Ressourcen im Fahrzeug zur Verfügung stehen und die Vorrichtung diese berücksichtigen muss. Es gibt eine maximale Anzahl an Steuergeräten, die gleichzeitig am selben Bus behandelt werden können, wird nun eine oder mehrere Verbindungen durch ein Steuergerät in Endlosschleife belegt, sinkt die Performanz massiv ab. Somit kann mittels der jeweiligen maximalen Durchführungszeit dazu beigetragen werden, dass die Steuergeräte sehr effektiv beschrieben werden.

Gemäß einer weiteren vorteilhaften Ausgestaltung wird jeweils eine Softwareeinheit in mehrere Softwareteileinheiten unterteilt. Die Softwareteileinheiten der jeweiligen Softwareeinheit werden für einen der Beschreibvorgänge an das jeweilige Steuergerät gesendet. Falls ein Fehler bei dem jeweiligen Beschreibvorgang erkannt wird, werden für diesen Beschreibvorgang nur die Softwareteileinheiten an das jeweilige Steuergerät gesendet, die noch nicht übertragen wurden oder die fehlerhaft übertragen wurden.

Da somit im Fehlerfall gegebenenfalls nicht die gesamte Softwareeinheit erneut übertragen werden muss, sondern nur einzelne Softwareteileinheiten übertragen werden, wird hierdurch eine sehr effektive Programmierung der Steuergeräte erreicht.

Ausführungsbeispiele der Erfindung sind im Folgenden anhand der schematischen Zeichnungen näher erläutert.

Es zeigen:
- Figur 1: einen Bus eines Fahrzeuges mit mehreren an den Bus angeschlossene Steuergeräte.
- Figur 2: ein Ablaufdiagramm zum Programmieren der Steuergeräte des Fahrzeuges über den Bus.

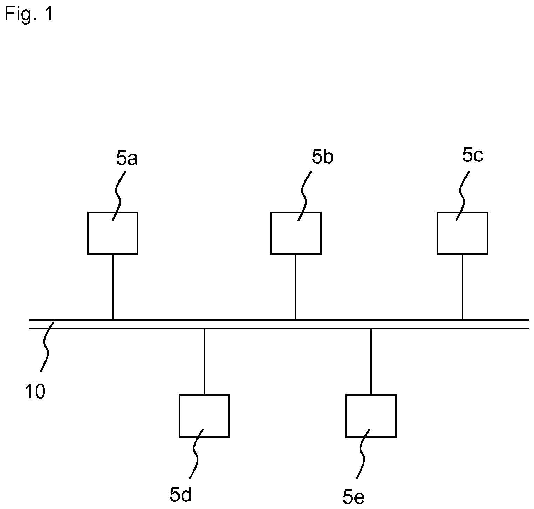

Figur 1 zeigt einen Bus 10 eines Fahrzeuges. Der Bus 10 ist beispielsweise ein CAN-Bus. An den Bus 10 sind mehrere Steuergeräte 5a, 5b, 5c, 5d, 5e angeschlossen, die somit über den Bus 10 miteinander kommunizieren können. Weiterhin kann insbesondere ein Tester an den Bus 10 angeschlossen werden, mittels dessen die Steuergeräte 5a, 5b, 5c, 5d, 5e programmiert werden können, also insbesondere mit neuer Firmware beschrieben werden können.

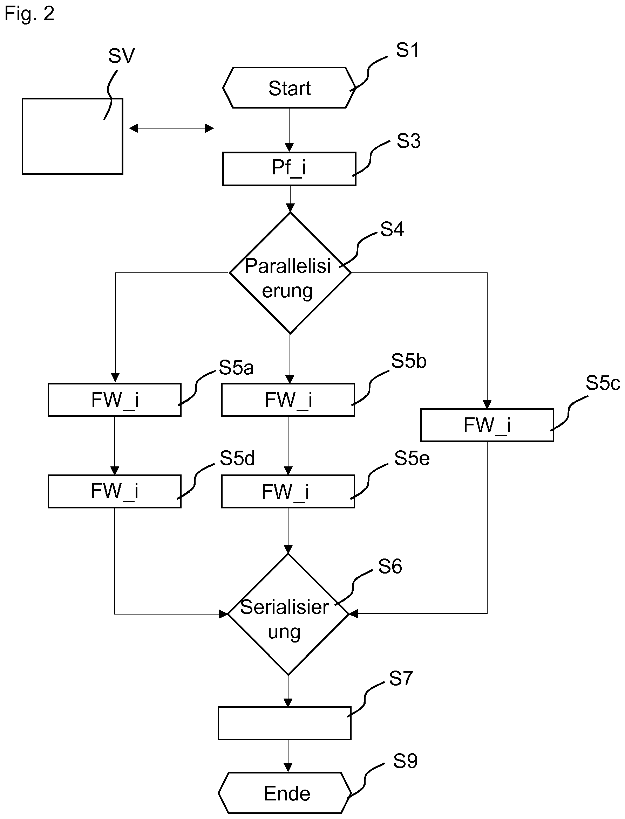

Figur 2 zeigt ein Ablaufdiagramm zum Programmieren der Steuergeräte 5a, 5b, 5c, 5d, 5e des Fahrzeuges über den Bus 10. Zum Programmieren der Steuergeräte 5a, 5b, 5c, 5d, 5e ist insbesondere in einer Steuervorrichtung SV ein Programm gespeichert, beispielsweise auf einem Daten- und Programmspeicher der Steuervorrichtung SV. Die Steuervorrichtung SV umfasst des Weiteren beispielsweise eine Recheneinheit zum Abarbeiten des Programms. Der Daten- und Programmspeicher und die Recheneinheit sind beispielsweise in einer Baueinheit und/oder verteilt in zwei oder mehrere Baueinheiten ausgebildet. Die Steuervorrichtung SV ist beispielsweise in dem Tester ausgebildet, der an den Bus 10 des Fahrzeuges angeschlossen werden kann.

Die Steuervorrichtung SV kann auch bezeichnet werden als Vorrichtung zum Programmieren von mehreren Steuergeräten eines Fahrzeuges über einen Bus.

Das Programm wird in einem Schritt S1 (Figur 2) gestartet, in dem gegebenenfalls Variablen initialisiert werden können.

In einem Schritt S3 werden die Steuergeräte 5a, 5b, 5c, 5d, 5e jeweils in einen Modus persistenter Busruhe versetzt. In dem Modus persistenter Busruhe versenden die Steuergeräte 5a, 5b, 5c, 5d, 5e jeweils nur Nachrichten auf dem Bus 10, wenn diese von extern des jeweiligen Steuergeräts 5a, 5b, 5c, 5d, 5e angefordert werden. Hierzu wird beispielsweise jeweils ein persistentes Flag PF_i in dem jeweiligen Steuergerät 5a, 5b, 5c, 5d, 5e gesetzt.

Befinden sich alle Steuergeräte 5a, 5b, 5c, 5d, 5e in dem Modus persistenter Busruhe, so wird das Programm in einem Schritt S4 fortgesetzt.

In dem Schritt S4 wird eine Parallelisierung vorbereitet, so dass anschließend mehrere Schritte quasi parallel abgearbeitet werden können.

In den Schritten S5a, S5b, S5c, S5d, S5e werden die Steuergeräte 5a, 5b, 5c, 5d, 5e jeweils in einem Beschreibvorgang des jeweiligen Steuergerätes 5a, 5b, 5c, 5d, 5e mit einer neuen Firmware FW_i beschrieben. Hierbei wird zumindest eine Teilmenge der Steuergeräte 5a, 5b, 5c, 5d, 5e derart beschrieben, dass sich die jeweiligen Beschreibvorgänge der Teilmenge der Steuergeräte 5a, 5b, 5c, 5d, 5e zeitlich überlappen. Beispielsweise werden, wie in Figur 2, die Steuergeräte 5a, 5b, 5c zeitlich überlappend mit neuer Firmware FW_i beschrieben und nachdem die Steuergeräte 5a und 5b beschrieben wurden, die Steuergeräte 5d, 5e, 5c zeitlich überlappend mit neuer Firmware FW_i beschrieben.

Beispielsweise aufgrund der Kapazität des Busses 10 können gegebenenfalls nicht alle Steuergeräte 5a, 5b, 5c, 5d, 5e quasi parallel beschrieben werden, deshalb wird gegebenenfalls eine Teilmenge der Steuergeräte 5a, 5b, 5c, 5d, 5e zeitlich überlappend programmiert und anschließend die restlichen Steuergeräte 5a, 5b, 5c, 5d, 5e und/oder eine weitere Teilmenge. Falls beispielsweise die Kapazität des Busses 10 ausreicht, können alternativ auch alle Steuergeräte 5a, 5b, 5c, 5d, 5e quasi parallel beschrieben werden. Das quasi parallele Beschreiben ist möglich, da jeder Beschreibvorgang mehrere Schritte umfasst. Diese Schritte umfassen insbesondere ein Löschen, ein Schreiben und ein Prüfen. Insbesondere bei den Schritten Löschen und Prüfen entsteht nur eine geringe Buslast. So kann beispielsweise ein Flashspeicher des Steuergerätes 5a gelöscht werden und gleichzeitig ein Flashspeicher des Steuergerätes 5b beschrieben werden.

Für die jeweiligen Beschreibvorgänge der Steuergeräte 5a, 5b, 5c, 5d, 5e wird beispielsweise eine maximale Durchführungszeit vorgegeben. Falls die jeweilige maximale Durchführungszeit überschritten wird, wird beispielsweise der jeweilige Beschreibvorgang neu gestartet.

Alternativ oder zusätzlich wird für die jeweiligen Beschreibvorgänge jeweils eine Softwareeinheit in mehrere Softwareteileinheiten unterteilt. Des Weiteren werden die Softwareteileinheiten der jeweiligen Softwareeinheit für jeweils einen der Beschreibvorgänge an das jeweilige Steuergerät 5a, 5b, 5c, 5d, 5e gesendet. Falls ein Fehler bei dem jeweiligen Beschreibvorgang erkannt wird, werden für diesen Beschreibvorgang nur die Softwareteileinheiten an das jeweilige Steuergerät 5a, 5b, 5c, 5d, 5e gesendet, die noch nicht übertragen wurden oder die fehlerhaft übertragen wurden.

Wurden alle Steuergeräte 5a, 5b, 5c, 5d, 5e erfolgreich mit neuer Firmware FW_i beschrieben, so wird das Programm in einem Schritt S6 fortgeführt.

In dem Schritt S6 wird eine Serialisierung herbeigeführt, so dass anschließend wieder die folgenden Schritte sequenziell durchgeführt werden.

In dem Schritt S7 werden die jeweiligen Steuergeräte 5a, 5b, 5c, 5d, 5e in einen Modus frei von persistenter Busruhe versetzt. Hierzu wird beispielsweise das jeweilige persistente Flag PF_i in dem jeweiligen Steuergerät 5a, 5b, 5c, 5d, 5e gelöscht.

Anschließend wird das Programm in einem Schritt S9 beendet und kann gegebenenfalls wieder in dem Schritt S1 gestartet werden.

Durch das erläuterte Vorgehen können mehrere Steuergeräte 5a, 5b, 5c, 5d, 5e eines Fahrzeuges quasi parallel und somit sehr effizient programmiert werden.

### Bezugszeichenliste

- 5a, 5b, 5c, 5d, 5e: Steuergerät
- 10: Bus
- PF_i: jeweiliges persistentes Flag
- FW_i: jeweilige neue Firmware

## Patentansprüche

1. Verfahren zum Programmieren von mehreren Steuergeräten (5a, 5b, 5c, 5d, 5e) eines Fahrzeuges über einen Bus (10), bei dem die Steuergeräte (5a, 5b, 5c, 5d, 5e) zeitlich überlappend beschrieben werden, **dadurch gekennzeichnet, dass**
- die Steuergeräte (5a, 5b, 5c, 5d, 5e) jeweils in einen Modus persistenter Busruhe versetzt werden, in dem die Steuergeräte (5a, 5b, 5c, 5d, 5e) jeweils nur Nachrichten auf dem Bus (10) versenden, wenn diese von extern des jeweiligen Steuergerätes (5a, 5b, 5c, 5d, 5e) angefordert werden und sich die jeweiligen Steuergeräte (5a, 5b, 5c, 5d, 5e) auch nach einem Neustart noch in diesem Modus befinden, wobei sich die Steuergeräte (5a, 5b, 5c, 5d, 5e) solange in einer Busruhe befinden, bis diese von extern aufgehoben wird,
- während die Steuergeräte (5a, 5b, 5c, 5d, 5e) sich in dem Modus persistenter Busruhe befinden, die Steuergeräte (5a, 5b, 5c, 5d, 5e) jeweils in einem Schreibvorgang des jeweiligen Steuergerätes (5a, 5b, 5c, 5d, 5e) mit einer neuen Firmware (FW_i) beschrieben werden, wobei zumindest eine Teilmenge der Steuergeräte (5a, 5b, 5c, 5d, 5e) derart beschrieben wird, dass sich die jeweiligen Schreibvorgänge der Teilmenge der Steuergeräte (5a, 5b, 5c, 5d, 5e) zeitlich überlappen.

2. Verfahren nach Anspruch 1,
wobei die Steuergeräte (5a, 5b, 5c, 5d, 5e) jeweils durch Setzen eines persistenten Flags (PF_i) in dem jeweiligen Steuergerät (5a, 5b, 5c, 5d, 5e) in den Modus persistenter Busruhe versetzt werden.

3. Verfahren nach Anspruch 1 oder 2,
wobei jeweils eine maximale Durchführungszeit vorgegeben wird für die jeweiligen Schreibvorgänge der Steuergeräte (5a, 5b, 5c, 5d, 5e) und, falls die jeweilige maximale Durchführungszeit überschritten wird, der jeweilige Schreibvorgang neu gestartet wird.

4. Verfahren nach einem der Ansprüche 1 bis 3,
bei dem
- jeweils eine Softwareeinheit in mehrere Softwareteileinheiten unterteilt wird,
- die Softwareteileinheiten der jeweiligen Softwareeinheit für einen der Schreibvorgänge an das jeweilige Steuergerät (5a, 5b, 5c, 5d, 5e) gesendet werden,
- falls ein Fehler bei dem jeweiligen Schreibvorgang erkannt wird, für diesen Schreibvorgang nur die Softwareteileinheiten an das jeweilige Steuergerät (5a, 5b, 5c, 5d, 5e) gesendet werden, die noch nicht übertragen wurden oder die fehlerhaft übertragen wurden.

5. System umfassend mehrere Steuergeräte (5a, 5b, 5c, 5d, 5e) eines Fahrzeuges und eine Vorrichtung zum Programmieren der Steuergeräte (5a, 5b, 5c, 5d, 5e) über einen Bus (10), wobei die Vorrichtung dazu ausgebildet ist, die Steuergeräte (5a, 5b, 5c, 5d, 5e) zeitlich überlappend zu beschreiben, **dadurch gekennzeichnet, dass**
- die Steuergeräte (5a, 5b, 5c, 5d, 5e) so ausgebildet sind, dass wenn sie in einen Modus persistenter Busruhe versetzt werden, in dem die Steuergeräte (5a, 5b, 5c, 5d, 5e) jeweils nur Nachrichten auf dem Bus (10) versenden, wenn diese von extern des jeweiligen Steuergerätes (5a, 5b, 5c, 5d, 5e) angefordert werden, sich die jeweiligen Steuergeräte (5a, 5b, 5c, 5d, 5e) auch nach einem Neustart noch in diesem Modus befinden, wobei sich die Steuergeräte (5a, 5b, 5c, 5d, 5e) solange in einer Busruhe befinden, bis diese von extern aufgehoben wird, und
- dass das System derart ausgebildet ist, dass während die Steuergeräte (5a, 5b, 5c, 5d, 5e) sich in dem Modus persistenter Busruhe befinden, die Steuergeräte (5a, 5b, 5c, 5d, 5e) jeweils in einem Schreibvorgang des jeweiligen Steuergerätes (5a, 5b, 5c, 5d, 5e) durch die Vorrichtung mit einer neuen Firmware (FW_i) beschrieben werden, wobei zumindest eine Teilmenge der Steuergeräte (5a, 5b, 5c, 5d, 5e) derart beschrieben wird, dass sich die jeweiligen Schreibvorgänge der Teilmenge der Steuergeräte (5a, 5b, 5c, 5d, 5e) zeitlich überlappen.

6. System nach Anspruch 5, das dazu ausgebildet ist, ein Verfahren nach einem der Ansprüche 2 bis 4 auszuführen.

## Claims

1. Method for programming a plurality of control units (5a, 5b, 5c, 5d, 5e) of a vehicle via a bus (10), in which the control units (5a, 5b, 5c, 5d, 5e) are written to in an overlapping manner in terms of time, **characterized in that**
- the control units (5a, 5b, 5c, 5d, 5e) are each changed to a persistent bus idle mode in which the control units (5a, 5b, 5c, 5d, 5e) each transmit messages on the bus (10) only if they are requested from outside the respective control unit (5a, 5b, 5c, 5d, 5e) and the respective control units (5a, 5b, 5c, 5d, 5e) are still in this mode even after a restart, the control units (5a, 5b, 5c, 5d, 5e) being in a bus idle mode until this is cancelled from the outside,
- while the control units (5a, 5b, 5c, 5d, 5e) are in the persistent bus idle mode, new firmware (FW_i) is written to each of the control units (5a, 5b, 5c, 5d, 5e) in a process of writing to the respective control unit (5a, 5b, 5c, 5d, 5e), at least one subset of the control units (5a, 5b, 5c, 5d, 5e) being written to in such a manner that the respective processes of writing to the subset of the control units (5a, 5b, 5c, 5d, 5e) overlap in terms of time.

2. Method according to Claim 1,
the control units (5a, 5b, 5c, 5d, 5e) each being changed to the persistent bus idle mode by setting a persistent flag (PF_i) in the respective control unit (5a, 5b, 5c, 5d, 5e).

3. Method according to Claim 1 or 2,
a maximum implementation time respectively being predefined for the respective processes of writing to the control units (5a, 5b, 5c, 5d, 5e) and, if the respective maximum implementation time is exceeded, the respective writing process being restarted.

4. Method according to one of Claims 1 to 3,
in which
- each software unit is subdivided into a plurality of software subunits,
- the software subunits of the respective software unit are transmitted to the respective control unit (5a, 5b, 5c, 5d, 5e) for one of the writing processes,
- if an error is detected in the respective writing process, only those software subunits which have not yet been transmitted or have been transmitted incorrectly are transmitted to the respective control unit (5a, 5b, 5c, 5d, 5e) for this writing process.

5. System comprising a plurality of control units (5a, 5b, 5c, 5d, 5e) of a vehicle and a device for programming the control units (5a, 5b, 5c, 5d, 5e) via a bus (10), the device being designed to write to the control units (5a, 5b, 5c, 5d, 5e) in an overlapping manner in terms of time, **characterized in that**
- the control units (5a, 5b, 5c, 5d, 5e) are designed in such a manner that, when they are changed to a persistent bus idle mode in which the control units (5a, 5b, 5c, 5d, 5e) each transmit messages on the bus (10) only if they are requested from outside the respective control unit (5a, 5b, 5c, 5d, 5e), the respective control units (5a, 5b, 5c, 5d, 5e) are still in this mode even after a restart, the control units (5a, 5b, 5c, 5d, 5e) being in a bus idle mode until this is cancelled from the outside, and
- **in that** the system is designed in such a manner that, while the control units (5a, 5b, 5c, 5d, 5e) are in the persistent bus idle mode, new firmware (FW_i) is written to each of the control units (5a, 5b, 5c, 5d, 5e) by the device in a process of writing to the respective control unit (5a, 5b, 5c, 5d, 5e), at least one subset of the control units (5a, 5b, 5c, 5d, 5e) being written to in such a manner that the respective processes of writing to the subset of the control units (5a, 5b, 5c, 5d, 5e) overlap in terms of time.

6. System according to Claim 5, which is designed to carry out a method according to one of Claims 2 to 4.

## Revendications

1. Procédé de programmation de plusieurs appareils de commande (5a, 5b, 5c, 5d, 5e) d'un véhicule par l'intermédiaire d'un bus (10), dans lequel les appareils de commande (5a, 5b, 5c, 5d, 5e) sont soumis à des écritures se chevauchant dans le temps, **caractérisé en ce que**
- les appareils de commande (5a, 5b, 5c, 5d, 5e) sont respectivement placés dans un mode de repos de bus persistant dans lequel les appareils de commande (5a, 5b, 5c, 5d, 5e) envoient respectivement des messages sur le bus (10) uniquement lorsque ceux-ci sont demandés de l'extérieur de l'appareil de commande (5a, 5b, 5c, 5d, 5e) respectif et que les appareils de commande (5a, 5b, 5c, 5d, 5e) respectifs se trouvent encore dans ce mode après un redémarrage, dans lequel les appareils de commande (5a, 5b, 5c, 5d, 5e) se trouvent dans un mode de repos de bus tant que celui-ci n'est pas invalidé de l'extérieur,
- tandis que les appareils de commande (5a, 5b, 5c, 5d, 5e) se trouvent dans le mode de repos de bus persistant, les appareils de commande (5a, 5b, 5c, 5d, 5e) sont respectivement soumis à une opération d'écriture de l'appareil de commande respectif (5a, 5b, 5c, 5d, 5e) avec un nouveau micrologiciel (FW_i), dans lequel au moins un sous-ensemble des appareils de commande (5a, 5b, 5c, 5d, 5e) est décrit de telle manière que les opérations d'écriture respectives du sous-ensemble des appareils de commande (5a, 5b, 5c, 5d, 5e) se chevauchent dans le temps.

2. Procédé selon la revendication 1,
dans lequel les appareils de commande (5a, 5b, 5c, 5d, 5e) sont respectivement placés dans le mode de repos de bus persistant en positionnant un drapeau persistant (PF_i) dans l'appareil de commande (5a, 5b, 5c, 5d, 5e) respectif.

3. Procédé selon la revendication 1 ou 2,
dans lequel un temps d'exécution maximal est respectivement spécifié pour les opérations d'écriture respectives des appareils de commande (5a, 5b, 5c, 5d, 5e) et, lorsque le temps d'exécution maximal respectif est dépassé, l'opération d'écriture respective est relancée.

4. Procédé selon l'une des revendications 1 à 3,
dans lequel
- une unité logicielle est respectivement divisée en plusieurs sous-unités logicielles,
- les sous-unités logicielles de l'unité logicielle respective sont envoyées à l'appareil de commande (5a, 5b, 5c, 5d, 5e) respectif pour l'une des opérations d'écriture,
- si une erreur est détectée lors de l'opération d'écriture respective, pour cette opération d'écriture, seules les sous-unités logicielles qui n'ont pas encore été transmises ou qui ont été transmises de manière erronée sont envoyées à l'appareil de commande (5a, 5b, 5c, 5d, 5e) respectif.

5. Système comprenant plusieurs appareils de commande (5a, 5b, 5c, 5d, 5e) d'un véhicule et un dispositif de programmation des appareils de commande (5a, 5b, 5c, 5d, 5e) par l'intermédiaire d'un bus (10), dans lequel le dispositif est conçu pour soumettre les appareils de commande (5a, 5b, 5c, 5d, 5e) à des écritures se chevauchant dans le temps, **caractérisé en ce que**
- les appareils de commande (5a, 5b, 5c, 5d, 5e) sont conçus de telle manière que lorsqu'il sont placés dans un mode de repos de bus persistant dans lequel les appareils de commande (5a, 5b, 5c, 5d, 5e) envoient respectivement des messages sur le bus (10) uniquement lorsque ceux-ci sont demandés de l'extérieur de l'appareil de commande (5a, 5b, 5c, 5d, 5e) respectif, les appareils de commande (5a, 5b, 5c, 5d, 5e) respectifs se trouvent encore dans ce mode après un redémarrage, dans lequel les appareils de commande (5a, 5b, 5c, 5d, 5e) se trouvent dans un mode de repos de bus tant que celui-ci n'est pas invalidé de l'extérieur, et
- **en ce que** le système est conçu de façon que, lorsque les appareils de commande (5a, 5b, 5c, 5d, 5e) se trouvent dans le mode de repos de bus persistant, les appareils de commande (5a, 5b, 5c, 5d, 5e) sont respectivement soumis à des écritures avec un nouveau micrologiciel (FW_i) par le dispositif dans une opération d'écriture de l'appareil de commande (5a, 5b, 5c, 5d, 5e) respectif, dans lequel au moins un sous-ensemble des appareils de commande (5a, 5b, 5c, 5d, 5e) est décrit de telle manière que les opérations d'écriture respectives du sous-ensemble des appareils de commande (5a, 5b, 5c, 5d, 5e) se chevauchent dans le temps.

6. Système selon la revendication 5, qui est conçu pour mettre en œuvre un procédé selon l'une des revendications 2 à 4.
